# EUROPEAN PATENT APPLICATION

(11) **EP 4 507 050 A1**
(43) Date of publication of application: **12.02.2025**
(21) Application number: 23788360.8
(22) Date of filing: 12.04.2023
(51) Int. Cl.: H01M 10/0525, H01G 11/32, H01G 11/64, H01M 4/133, H01M 4/587, H01M 10/0567

(54) **NON-AQUEOUS ELECTROLYTE STORAGE ELEMENT**

(30) Priority: 15.04.2022 JP 2022067852
(71) Applicant: GS Yuasa International Ltd., Kisshoin, Minami-ku, Kyoto-shi, Kyoto 601-8520 (JP)
(72) Inventor: OKUBO, Takashi, Kyoto-shi, Kyoto 601-8520 (JP); KANEKO, Takashi, Kyoto-shi, Kyoto 601-8520 (JP)
(74) Representative: Isarpatent
(86) International application number: PCT/JP2023/014853
(87) International publication number: WO 2023/199942

(57) **Abstract**

A nonaqueous electrolyte energy storage device according to an aspect of the present invention includes: a negative electrode including a negative active material including solid graphite; and a nonaqueous electrolyte including a compound represented by the following formula (1). In the formula (1), R¹ and R² are each independently a hydrogen atom or a hydrocarbon group, provided that the total number of carbon atoms of R¹ and R² is 3 or less.

## Description

### TECHNICAL FIELD

The present invention relates to a nonaqueous electrolyte energy storage device.

### BACKGROUND ART

Nonaqueous electrolyte solution secondary batteries typified by lithium ion secondary batteries are widely used for electronic devices such as personal computers and communication terminals, motor vehicles, and the like since these secondary batteries have a high energy density. In addition, capacitors such as lithium ion capacitors and electric double layer capacitors are also widely used as nonaqueous electrolyte energy storage devices other than the nonaqueous electrolyte solution secondary batteries.

The nonaqueous electrolyte energy storage device generally includes an electrode assembly in which a positive electrode including a positive active material and a negative electrode including a negative active material are stacked with a separator interposed therebetween. Such an electrode assembly is housed together with a nonaqueous electrolyte in a case to construct an energy storage device. As a negative active material, a carbon material such as graphite is widely used (see Patent Documents 1 and 2).

### PRIOR ART DOCUMENTS

### PATENT DOCUMENTS

Patent Document 1: JP-A-2005-222933
Patent Document 2: JP-A-2017-069039

### SUMMARY OF THE INVENTION

### PROBLEMS TO BE SOLVED BY THE INVENTION

The use of solid graphite with small voids or substantially no voids inside particles as graphite to serve as a negative active material of a nonaqueous electrolyte energy storage device has been studied. Solid graphite has advantages such as excellent durability as compared with hollow graphite with large voids inside particles. In contrast, a nonaqueous electrolyte energy storage device in which solid graphite is used has the disadvantage of being higher in direct-current resistance at a low temperature as compared with a nonaqueous electrolyte energy storage device in which hollow graphite is used.

An object of the present invention is to provide a nonaqueous electrolyte energy storage device in which solid graphite is used, with a low direct-current resistance at a low temperature.

### MEANS FOR SOLVING THE PROBLEMS

A nonaqueous electrolyte energy storage device according to an aspect of the present invention includes: a negative electrode including a negative active material including solid graphite; and a nonaqueous electrolyte including a compound represented by the following formula (1): 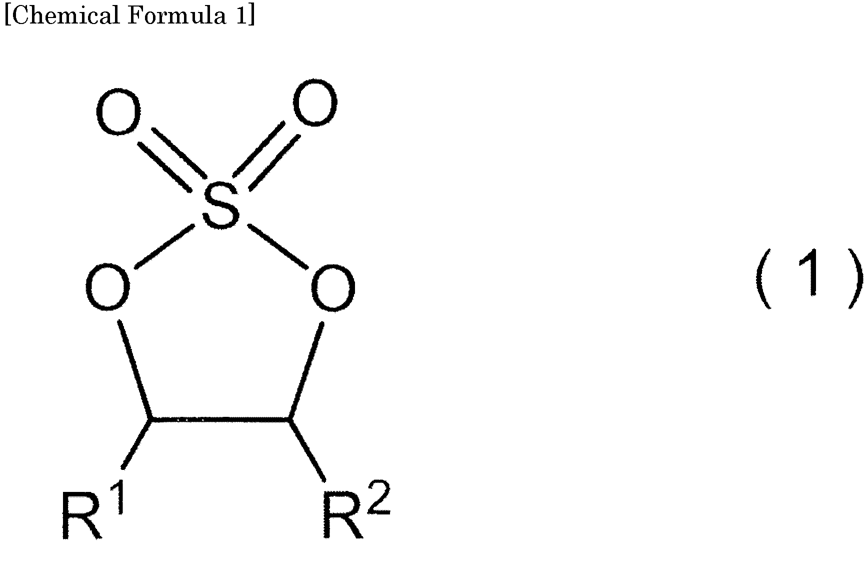 (In the formula (1), R¹ and R² are each independently a hydrogen atom or a hydrocarbon group, provided that the total number of carbon atoms of R¹ and R² is 3 or less).

### ADVANTAGES OF THE INVENTION

According to an aspect of the present invention, it is possible to provide a nonaqueous electrolyte energy storage device in which solid graphite is used, with a low direct-current resistance at a low temperature.

### BRIEF DESCRIPTION OF THE DRAWINGS

Fig. 1 is a see-through perspective view illustrating an embodiment of a nonaqueous electrolyte energy storage device.
Fig. 2 is a schematic diagram showing an embodiment of an energy storage apparatus including a plurality of nonaqueous electrolyte energy storage devices.

### MODE FOR CARRYING OUT THE INVENTION

First, an outline of a nonaqueous electrolyte energy storage device disclosed in the present specification will be described.
**[1]** A nonaqueous electrolyte energy storage device according to an aspect of the present invention includes: a negative electrode including a negative active material including solid graphite; and a nonaqueous electrolyte including a compound represented by the following formula (1): 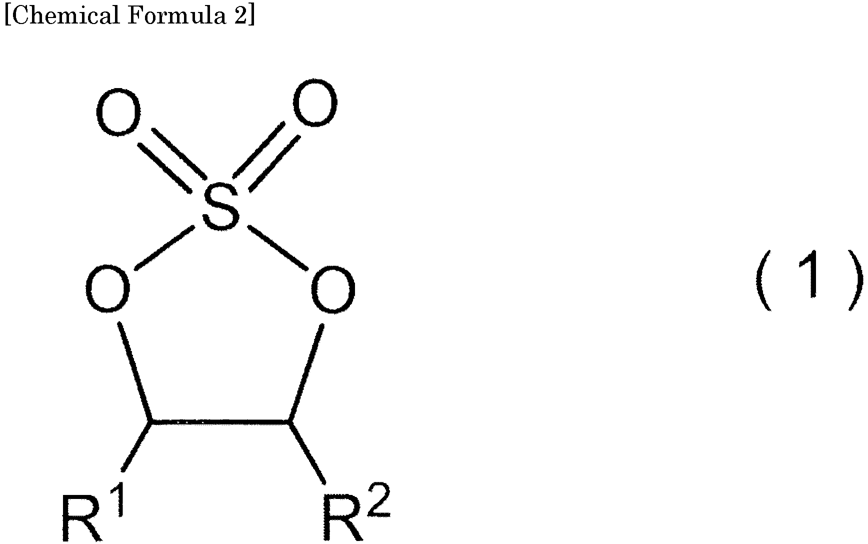 (In the formula (1), R¹ and R² are each independently a hydrogen atom or a hydrocarbon group, provided that the total number of carbon atoms of R¹ and R² is 3 or less).

The nonaqueous electrolyte energy storage device according to [1] is a nonaqueous electrolyte energy storage device in which the solid graphite, which has a low direct-current resistance at a low temperature. The reason therefor is not clear, but the following reason is presumed. Common graphite has voids inside particles. Thus, the graphite in the negative electrode incorporated in the nonaqueous electrolyte energy storage device has a good-quality film derived from the additive in the nonaqueous electrolyte, formed not only on the outer surfaces of the particles but also in the voids inside the particles, and this film produces a resistance reduction effect. In contrast, in the case of solid graphite, the additive is less likely to penetrate into the particles, thereby resulting in insufficient film formation inside the particles. In particular, when the additive added to the nonaqueous electrolyte has large molecules, the additive is less likely to penetrate into the solid graphite, and thus, the film formation inside the particles is less likely to be achieved, thereby reducing the resistance reduction effect produced by the film. In contrast, the compound represented by the formula (1) has relatively small molecules, and the compound is thus considered capable of sufficiently penetrating even into the solid graphite to form a film. As described above, the compound represented by the formula (1) is considered capable of forming a good-quality film from the outer surface of to the inside of the solid graphite, thus reducing the direct-current resistance of the nonaqueous electrolyte energy storage device at a low temperature.

The term "graphite" refers to a carbon material in which the average lattice spacing (d₀₀₂) of a (002) plane determined by an X-ray diffraction method before charge-discharge or in a discharged state is 0.33 nm or more and less than 0.34 nm. In this regard, the "discharged state" of the carbon material means a state discharged such that lithium ions that can be occluded and released in association with charge-discharge are sufficiently released from the carbon material that is a negative active material. For example, the "discharged state" refers to a state where the open circuit voltage is 0.7 V or higher in a half cell that has, as a working electrode, a negative electrode including a carbon material as a negative active material, and has metal Li as a counter electrode.

The term "solid" of the solid graphite means that the inside of the particle of the graphite is filled substantially without voids. More specifically, being "solid" means that in a cross section of a particle observed in a SEM image acquired with the use of a scanning electron microscope (SEM), the void area ratio (void ratio) in the particle to the area of the whole particle is 2% or less.

"The void area ratio (void ratio) in the particle to the area of the whole particle" in the graphite particles can be determined by the following procedure.

### (1) Preparation of sample for measurement

The negative electrode to be measured is fixed with a thermosetting resin. A cross section polisher is used to expose a cross section of the negative electrode fixed with the resin to prepare a sample for measurement. It is to be noted that the negative electrode to be measured are prepared in accordance with the following procedure. When the negative electrode before assembling the nonaqueous electrolyte energy storage device can be prepared, the negative electrode is used as it is. In the case of preparing from the assembled nonaqueous electrolyte energy storage device, first, the nonaqueous electrolyte energy storage device is subjected to constant current discharge at a current of 0.1 C to an end-of-discharge voltage under normal usage, into a discharged state. The nonaqueous electrolyte energy storage device in the discharged state is disassembled, the negative electrode is taken out, then sufficiently washed with a dimethyl carbonate, and then dried under reduced pressure at room temperature. The operations from the disassembly of the nonaqueous electrolyte energy storage device to the preparation of the negative electrode to be measured are performed in a dry air atmosphere with a dew point of - 40°C or lower.

The term of "under normal usage" refers to a case of using the nonaqueous electrolyte energy storage device while employing charge-discharge conditions recommended or specified for the nonaqueous electrolyte energy storage device, and when a device for using the nonaqueous electrolyte energy storage device is prepared, refers to a case of using the nonaqueous electrolyte energy storage device with the device applied.

### (2) Acquisition of SEM image

For acquiring the SEM image (cross-sectional SEM image), JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is three or more and fifteen or less. The obtained SEM image is stored as an image file. In addition, various conditions such as a spot diameter, a working distance, an irradiation current, luminance, and a focus are appropriately set so as to make the contours of the graphite particles clear.

### (3) Cut-out of contour of graphite particle

The contour of the graphite particle is cut out from the acquired SEM image by using an image cutting function of image editing software Adobe Photoshop Elements 11. The contour is cut out by using a quick selection tool to select the outside of the contour of the graphite particle and edit the part excluding the graphite particle to a black background. In this regard, when the number of graphite particles from which the contours have been able to be cut out is less than three, an SEM image is acquired again, and the cut-out is performed until the number of graphite particles from which the contours have been able to be cut out is three or more.

### (4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as an "area S1 of voids in the particle".

Then, the image of the same first graphite particle is subjected to binarization processing with a concentration of 10% as a threshold value. The outer edge of the graphite particle is determined by the binarization processing, and the area inside the outer edge is calculated as an "area S0 of the whole particle".

The ratio (S1/S0) of S1 to S0 is calculated with the use of S1 and S0 calculated above to calculate an "area ratio R1 of voids in the particle to the area of the whole particle" in the first graphite particle.

The images of the second and subsequent graphite particles among the cut-out graphite particles are also each subjected to the binarization processing mentioned above, and the areas S1 and S0 are calculated. Based on the calculated area S1 and area S0, area ratios R2, R3, ... of voids of the respective graphite particles are calculated.

### (5) Determination of void area ratio

The average value for all of the area ratios R1, R2, R3, ... of the voids, calculated by the binarization processing is calculated to determine "the area ratio (void ratio) of voids in the particles to the total area of the particles".

It is to be noted that, instead of the scanning electron microscope used for "acquisition of SEM image", the image editing software used for "cut-out of contour of graphite particle", and the image analysis software used for the "binarization processing", apparatuses, software, and the like capable of the corresponding measurement, image editing, and image analysis may be used.

[2] In the nonaqueous electrolyte energy storage device according to [1], the nonaqueous electrolyte may further contain a difluorophosphate.

The nonaqueous electrolyte energy storage device according to [2] has a lower direct-current resistance at a low temperature.

[3] In the nonaqueous electrolyte energy storage device according to any one of [1] and [2], the ratio of an area occupied by the solid graphite to an area occupied by the negative active material may be more than 50% in a cross-sectional SEM image of the negative electrode.

In the nonaqueous electrolyte energy storage device according to [3], the solid graphite is a main negative active material in the negative electrode, and the effect of reducing the direct-current resistance of the nonaqueous electrolyte energy storage device at a low temperature is thus particularly remarkably produced. In addition, the solid graphite is a main negative active material, thereby improving the durability and the like. The cross-sectional SEM image of the negative electrode is acquired in accordance with the same procedure as the SEM image for determining "the area ratio (void ratio) of voids in the particles to the total area of the particles" for the graphite particles. The area occupied by the negative active material is the total area of the particles of the negative active material (the area also including voids). Further, the ratio of the area occupied by the solid graphite to the area occupied by the negative active material (the area occupied by the solid graphite/the area occupied by the negative active material) is determined with the use of a cross-sectional SEM image including ten or more particles of the negative active material in one field of view.

[4] In the nonaqueous electrolyte energy storage device according to any one of the above [1] to [3], the solid graphite may be natural graphite.

The nonaqueous electrolyte energy storage device according to [4] has a lower direct-current resistance at a low temperature.

[5] In the nonaqueous electrolyte energy storage device according to any one of the above [1] to [4], in the solid graphite, the area ratio (void ratio) of voids in the particles to the total area of the particles may be 0.01% or more and 0.5% or less in a cross section of the particles observed in an SEM image acquired with the use of a scanning electron microscope (SEM).

The nonaqueous electrolyte energy storage device according to [5] has a lower direct-current resistance at a low temperature.

[6] In the nonaqueous electrolyte energy storage device according to any one of [1] to [5], the content of the compound represented by the formula (1) in the nonaqueous electrolyte may be more than 0% by mass and 5% by mass or less.

The nonaqueous electrolyte energy storage device according to [6] has a lower direct-current resistance at a low temperature.

A nonaqueous electrolyte energy storage device according to an embodiment of the present invention, an energy storage apparatus, and a method for manufacturing the nonaqueous electrolyte energy storage device, and other embodiments will be described in detail. It is to be noted that the names of the respective constituent members (respective constituent elements) for use in the respective embodiments may be different from the names of the respective constituent members (respective constituent elements) for use in the background art.

### <Nonaqueous electrolyte energy storage device>

A nonaqueous electrolyte energy storage device according to an embodiment of the present invention includes: an electrode assembly including a positive electrode, a negative electrode, and a separator; a nonaqueous electrolyte; and a case that houses the electrode assembly and the nonaqueous electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The nonaqueous electrolyte is present with the positive electrode, negative electrode, and separator impregnated with the electrolyte. A nonaqueous electrolyte secondary battery (hereinafter, also referred to simply as a "secondary battery") will be described as an example of the nonaqueous electrolyte energy storage device.

### (Positive electrode)

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, still more preferably 8 µm or more and 30 µm or less, particularly preferably 10 µm or more and 25 µm or less. The average thickness of the positive substrate falls within the range mentioned above, thereby allowing the energy density per volume of the nonaqueous electrolyte energy storage device to be increased while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an α-NaFeO₂-type crystal structure, lithium-transition metal oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{y}Co_{(1-x-y)}]O₂ (0 ≤ x < 0.5, 0 < y < 1, 0 < 1-x-y), Li[LiₓCo₍₁₋ₓ₎]O₂ (0 ≤ x < 0.5), Li[LiₓNi_{y}Mn_{(1-x-y)}]O₂ (0 ≤ x < 0.5, 0 < y < 1, 0 < 1-x-y), Li[LiₓNi_{y}Mn_{B}Co_{(1-x-y-β)}]O₂ (0 ≤ x < 0.5, 0 < y, 0 < B, 0.5 < y + β < 1, 0 < 1-x-γ-β), and Li[LiₓNi_{y}Co_{B}Al_{(1-x-y-β)}]O₂ (0 ≤ x < 0.5, 0 < y, 0 < B, 0.5 < y + β < 1, 0 < 1-x-γ-β). Examples of the lithium-transition metal composite oxides having a spinel-type crystal structure include LiₓMn₂O₄ and LiₓNi_{y}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used alone, or two or more thereof may be used in mixture.

The positive active material is typically particles (powder). The average particle size of the positive active material is preferably 0.1 µm or more and 20 µm or less, for example. By setting the average particle size of the positive active material to be equal to or greater than the lower limit, the positive active material is easily manufactured or handled. By setting the average particle size of the positive active material to be equal to or less than the upper limit, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the increased energy density and manufacturability of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a composite material of carbon black and CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the range mentioned above, the energy density of the nonaqueous electrolyte energy storage device can be enhanced.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance. When the positive active material layer contains a thickener, the content of the thickener in the positive active material layer can be, for example, 0.1% by mass or more and 10% by mass or less. The content of the thickener in the positive active material layer may be 5% by mass or less, may be 1% by mass or less, and may be 0% by mass.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. When the positive active material layer contains a filler, the content of the filler in the positive active material layer can be, for example, 0.1% by mass or more and 10% by mass or less. The content of the filler in the positive active material layer may be 5% by mass or less, may be 1% by mass or less, and may be 0% by mass.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agents, the binder, the thickener, and the filler.

The positive electrode can be fabricated, for example, by applying a positive composite paste to a positive substrate directly or with an intermediate layer interposed therebetween, and drying the paste. After the drying, pressing or the like may be performed, if necessary. The positive composite paste includes respective components constituting the positive active material layer, such as the positive active material, and the conductive agent or binder as an optional component. The positive composite paste typically further includes a dispersion medium.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 µm or more and 35 µm or less, more preferably 3 µm or more and 30 µm or less, still more preferably 4 µm or more and 25 µm or less, particularly preferably 5 µm or more and 20 µm or less. The average thickness of the negative substrate falls within the range mentioned above, thereby allowing the energy density per volume of the nonaqueous electrolyte energy storage device to be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode. The graphite included in the negative active material layer is, however, not included in the conductive agent.

The negative active material includes solid graphite. The negative active material of the negative electrode includes the solid graphite, and thus, the nonaqueous electrolyte energy storage device has excellent durability. For example, a nonaqueous electrolyte energy storage device in which solid graphite is used for a negative active material tends to have a high capacity retention ratio after a charge-discharge cycle. In addition, in the nonaqueous electrolyte energy storage device, the nonaqueous electrolyte includes the compound represented by the formula (1) while the solid graphite is used for the negative active material, and thus, the nonaqueous electrolyte energy storage device has a low direct-current resistance at a low temperature.

The solid graphite may be artificial graphite or natural graphite. The artificial graphite is a generic term for artificially produced graphite, and the natural graphite is a generic term for graphite which can be taken from natural minerals. Specific examples of the natural graphite include scale-like graphite (flake graphite), massive graphite, and earthy graphite. The solid graphite may be flattened scale-like natural graphite or spheroidized natural graphite obtained by spheroidizing the scale-like graphite. The solid graphite may be graphite particles, the surfaces of which are subjected to coating (for example, amorphous carbon coating). The solid graphite can be produced by applying a compression treatment or the like to hollow graphite.

The solid graphite may be preferably natural graphite (solid natural graphite). The natural graphite may have four peaks appearing at diffraction angles 2θ in the range from 40° to 50° in an X-ray diffraction pattern obtained with the use of CuKα, measured before charge-discharge or in a discharged state. These four peaks are considered to be two peaks derived from a hexagonal structure and two peaks derived from a rhombohedral structure. In the case of artificial graphite, generally, only two peaks derived from a hexagonal structure are considered to appear. In the X-ray diffraction pattern, the ratio ((012)/(100)) of the peak intensity derived from the (012) plane to the peak intensity derived from the (100) plane is preferably 0.3 or more, more preferably 0.4 or more. The peak intensity ratio ((012)/(100)) is preferably 0.6 or less. In this regard, the

(100) plane is derived from the hexagonal structure, and the (012) plane is derived from the rhombohedral structure.

The upper limit of the void ratio of the solid graphite in the SEM image (cross-sectional SEM image) is 2%, preferably 1%, more preferably 0.7%, still more preferably 0.5%. In addition, the lower limit of the void ratio may be, for example, 0% or 0.01%, but may be preferably 0.05%, 0.1%, or 0.2%. For example, the void ratio may be 0% or more and 2% or less, may be 0% or more and 1% or less, may be 0% or more and 0.7% or less, or may be 0% or more and 0.5% or less. In addition, the void ratio may be 0.01% or more and 2% or less, may be 0.01% or more and 1% or less, may be 0.01% or more and 0.7% or less, or may be 0.01% or more and 0.5% or less. In addition, the void ratio may be 0.05% or more and 2% or less, may be 0.05% or more and 1% or less, may be 0.05% or more and 0.7% or less, or may be 0.05% or more and 0.5% or less. In addition, the void ratio may be 0.1% or more and 2% or less, may be 0.1% or more and 1% or less, may be 0.1% or more and 0.7% or less, or may be 0.1% or more and 0.5% or less. In addition, the void ratio may be 0.2% or more and 2% or less, may be 0.2% or more and 1% or less, may be 0.2% or more and 0.7% or less, or may be 0.2% or more and 0.5% or less. The presence of a few voids in the solid graphite may cause a film to be formed even inside, and remarkably produce the effect of resistance reduction.

The average particle size of the solid graphite is, for example, preferably 1 µm or more and 100 µm or less, more preferably 2 µm or more and 50 µm or less, still more preferably 3 µm or more and 30 µm or less, even more preferably 5 µm or more and 20 µm or less. By setting the average particle size of the solid graphite within the range mentioned above, the effect of resistance reduction by film formation is more sufficiently produced.

The negative active material may include other negative active materials besides the solid graphite. Examples of the other negative active materials include metal Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite other than the solid graphite and non-graphitic carbon (easily graphitizable carbon or hardly graphitizable carbon).

The term "non-graphitic carbon" refers to a carbon material in which the average lattice spacing (d₀₀₂) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol-derived material.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

Among all of the negative active materials included in the negative active material layer, the solid graphite is preferably a main active material. For example, in a cross-sectional SEM image of the negative electrode, the ratio of the area occupied by the solid graphite to the area occupied by the negative active material (the area occupied by the solid graphite/the area occupied by the negative active material) is preferably more than 50%, more preferably 60% or more, 70% or more, 80% or more, 90% or more, 95% or more, or 100%. In addition, the content of the solid graphite with respect to all of the negative active materials included in the negative active material layer is preferably more than 50% by mass, more preferably 60% by mass or more, 70% by mass or more, 80% by mass or more, 90% by mass or more, 95% by mass or more, or 100% by mass. More specifically, it is particularly preferable to use only the solid graphite as the negative active material. In such a case, the effect of reducing the direct-current resistance of the nonaqueous electrolyte energy storage device at a low temperature is particularly remarkably produced, and the durability and the like of the nonaqueous electrolyte energy storage device are also improved.

The content of the solid graphite in the negative active material layer is preferably 60% by mass or more and 99% by mass or less, more preferably 90% by mass or more and 98% by mass or less, and may be further preferably 95% by mass or more. In addition, the content of the negative active material in the negative active material layer is preferably 60% by mass or more and 99% by mass or less, more preferably 90% by mass or more and 98% by mass or less, and may be still more preferably 95% by mass or more. The content of the solid graphite or negative active material falls within the range mentioned above, thereby allowing a balance to be achieved between the increased energy density and productivity of the negative active material layer.

When a conductive agent is contained in the negative active material layer, the content of the conductive agent in the negative active material layer may be, for example, 1% by mass or more and 10% by mass or less. The content of the conductive agent in the negative active material layer is preferably 5% by mass or less, and may be more preferably 2% by mass or less, 1% by mass or less, 0.1% by mass or less, or 0% by mass. When the content of the conductive agent in the negative active material layer is low, or when no conductive agent is contained, the content of the negative active material can be increased, and the energy density and the like can be increased.

The content of the binder in the negative active material layer is preferably 0.1% by mass or more and 10% by mass or less, more preferably 1% by mass or more and 5% by mass or less. The content of the binder falls within the range mentioned above, thereby allowing the negative active material to be stably held.

The content of the thickener in the negative active material is preferably 0.1% by mass or more and 5% by mass or less.

When the negative active material layer contains a filler, the content of the filler in the negative active material layer can be, for example, 0.1% by mass or more and 10% by mass or less. The content of the filler in the negative active material layer may be 5% by mass or less, may be 1% by mass or less, and may be 0% by mass. When the content of the filler in the negative active material layer is low, or when no filler is contained, the content of the negative active material can be increased, and the energy density and the like can be increased.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material layer may have a stacked structure of two or more layers that have different compositions from each other, but is preferably a single layer structure. Also when the negative active material layer is provided on each of both surfaces of the negative substrate, each of the negative active material layers preferably has a single layer structure. The negative electrode including such a negative active material layer has advantages such as excellent productivity.

The negative electrode can be fabricated, for example, by applying a negative composite paste to a negative substrate directly or with an intermediate layer interposed therebetween, and drying the paste. After the drying, pressing or the like may be performed, if necessary. The negative composite paste includes respective components constituting the negative active material layer, such as the negative active material including the solid graphite, and the conductive agent or binder as an optional component. The negative composite paste typically further includes a dispersion medium.

### (Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used alone, or two or more thereof may be used in mixture. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte includes a compound represented by the formula (1). For the nonaqueous electrolyte, a nonaqueous electrolyte solution may be used. The nonaqueous electrolyte solution includes a nonaqueous solvent, an electrolyte salt dissolved in the nonaqueous solvent, and the compound represented by the formula (1).

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as LiPF₆, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these salts, the inorganic lithium salts are preferable, and LiPF₆ is more preferable.

The content of the electrolyte salt in the nonaqueous electrolyte solution is, under 1 atm at 20°C, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

In the compound represented by the formula (1), R¹ and R² in the formula (1) are each independently a hydrogen atom or a hydrocarbon group, provided that the total number of carbon atoms of R¹ and R² is 3 or less. Examples of the hydrocarbon groups represented by R¹ and R² in the formula (1) include alkyl groups such as a methyl group, an ethyl group, and a propyl group, and alkenyl groups such as a vinyl group, and an alkyl group is preferable. At least one of R¹ and R² is preferably a hydrogen atom, and both R¹ and R² are more preferably hydrogen atoms.

Examples of the compound represented by the formula (1) include ethylene sulfate in which both R¹ and R² are hydrogen atoms, 2,3-propylene sulfate in which R¹ is a hydrogen atom, whereas R² is a methyl group, and 4,5-pentene sulfate in which R¹ is a hydrogen atom, whereas R² is a propyl group, and the ethylene sulfate is preferable. One of the compounds represented by the formula (1) may be used, or two or more thereof may be used in mixture.

The content of the compound represented by the formula (1) in the nonaqueous electrolyte solution (nonaqueous electrolyte) can be, for example, more than 0% by mass and 5% by mass or less, may be 0.01% by mass or more and 3% by mass or less, or may be 0.1% by mass or more and 2% by mass or less. In addition, the content may be, for example, more than 0% by mass and 5% by mass or less, may be more than 0% by mass and 3% by mass or less, or may be more than 0% by mass and 2% by mass or less. In addition, the content may be, for example, 0.01% by mass or more and 5% by mass or less, may be 0.01% by mass or more and 3% by mass or less, or may be 0.01% by mass or more and 2% by mass or less. In addition, the content may be, for example, 0.1% by mass or more and 5% by mass or less, may be 0.1% by mass or more and 3% by mass or less, or may be 0.1% by mass or more and 2% by mass or less. The compound represented by the formula (1) is typically decomposed in initial charge-discharge to form a film on the outer surface and inside of the solid graphite. Accordingly, in the assembled nonaqueous electrolyte energy storage device, if the compound represented by the formula (1) remains in the nonaqueous electrolyte even in a trace amount, a film derived from the compound represented by the formula (1) is already formed on the outer surface of and inside the solid graphite, and the effect based on the compound represented by the formula (1) is produced.

The nonaqueous electrolyte solution (nonaqueous electrolyte) preferably further contains a difluorophosphate. When the nonaqueous electrolyte contains a difluorophosphate together with the compound represented by the formula (1), the direct current resistance of the nonaqueous electrolyte energy storage device at a low temperature is further reduced. Examples of the difluorophosphate include lithium difluorophosphate and sodium difluorophosphate, and lithium difluorophosphate is preferable. One of the difluorophosphates may be used alone, or two or more thereof may be used in mixture.

The content of the difluorophosphate in the nonaqueous electrolyte solution (nonaqueous electrolyte) can be, for example, more than 0% by mass and 3% by mass or less, and may be 0.01% by mass or more and 1.8% by mass or less, or may be 0.1% by mass or more and 1.6% by mass or less. The difluorophosphate is, as with the compound represented by the formula (1), typically decomposed in initial charge-discharge to form a film on the outer surface and inside of the solid graphite. Accordingly, in the assembled nonaqueous electrolyte energy storage device, if the difluorophosphate remains in the nonaqueous electrolyte even in a trace amount, a film derived from the difluorophosphate is already formed together with the compound represented by the formula (1) on the outer surface of and inside the solid graphite, and the effect based on the difluorophosphate is produced.

The nonaqueous electrolyte solution may contain other additives, besides the nonaqueous solvent, the electrolyte salt, the compound represented by the formula (1), and the difluorophosphate. Examples of the other additives include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of the other additives may be used, or two or more thereof may be used in mixture.

The content of the other additives contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to the total mass of the nonaqueous electrolyte solution. The content of the other additives falls within the range mentioned above, thereby making it possible to improve capacity retention performance or cycle performance after high-temperature storage, and further improve the safety.

For the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

Examples of the sulfide solid electrolytes include, in the case of a lithium ion secondary battery, Li₂S-P₂S₅, LiI-Li₂S-P₂S₅, and Li₁₀Ge-P₂S₁₂.

The shape of the nonaqueous electrolyte energy storage device according to the present embodiment is not particularly limited, and examples thereof include cylindrical batteries, prismatic batteries, flat batteries, coin batteries, and button batteries.

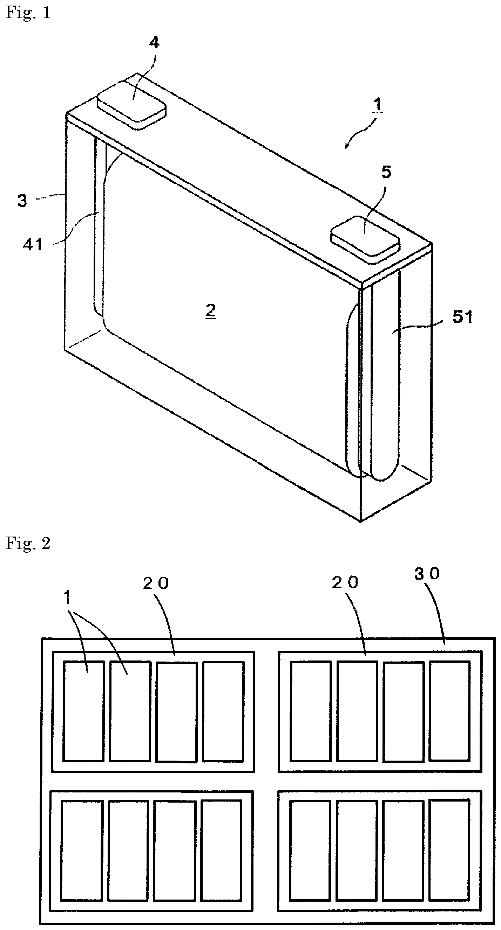

Fig. 1 shows a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 shows an example of an energy storage apparatus 30 obtained by assembling energy storage units 20 each obtained by assembling two or more electrically connected nonaqueous electrolyte energy storage devices 1. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

The content of the compound represented by the formula (1) in the nonaqueous electrolyte to be prepared is preferably 0.1% by mass or more and 5% by mass or less, more preferably 0.2% by mass or more and 2% by mass or less. In addition, when the nonaqueous electrolyte contains a difluorophosphate, the content of the difluorophosphate in the nonaqueous electrolyte to be prepared is preferably 0.1% by mass or more and 3% by mass or less, more preferably 0.2% by mass or more and 1.8% by mass or less.

### <Other embodiments>

It is to be noted that the nonaqueous electrolyte energy storage device according to the present invention is not limited to the embodiment mentioned above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to the configuration according to an embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly does not have to include the separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples, but the present invention is not to be considered limited to the following examples.

### [Example 1]

### (Fabrication of positive electrode)

A positive composite paste was prepared with the use of LiNi_{1/3}Co_{1/3}Mn_{1/3}O₂ as a positive active material, acetylene black (AB) as a conductive agent, a polyvinylidene fluoride (PVDF) as a binder, and N-methylpyrrolidone (NMP) as a dispersion medium. It is to be noted that the mass ratios of the positive active material, AB, and PVDF were set to be 93 : 4 : 3 (in terms of solid content). The positive composite paste was applied to one surface of an aluminum foil as a positive substrate, and dried. Thereafter, roll pressing was performed to obtain a positive electrode.

### (Fabrication of negative electrode)

Solid natural graphite as a negative active material, a styrene-butadiene rubber (SBR) as a binder, carboxymethyl cellulose (CMC) as a thickener, and water as a dispersion medium were mixed to prepare a negative composite paste. It is to be noted that the mass ratios of solid natural graphite, SBR, and CMC were set to be 98 : 1: 1 (in terms of solid content). The negative composite paste was applied to one surface of a copper foil as a negative substrate, and dried. Thereafter, roll pressing was performed to obtain a negative electrode. The void ratio of the solid natural graphite, determined by the method mentioned above, was 0.49%, and the average particle size was 7.7 µm. In addition, only the solid natural graphite was used as the negative active material, and thus, the ratio of the area occupied by the solid graphite to the area occupied by the negative active material in the cross-sectional SEM image of the negative electrode is 100%.

### (Nonaqueous electrolyte solution)

In a solvent obtained by mixing an ethylene carbonate and an ethyl methyl carbonate at a volume ratio of 30 : 70, LiPF₆ was dissolved at a concentration of 1.2 mol/dm³, and an ethylene sulfate (compound A: compound where R¹ and R² in the formula (1) are both a hydrogen atom) as a compound represented by the formula (1) mentioned above was further dissolved at a concentration of 0.5% by mass as an additive to obtain a nonaqueous electrolyte solution.

### (Separator)

A polyolefin microporous membrane was used for the separator.

### (Assembly of nonaqueous electrolyte energy storage device)

The positive electrode, the negative electrode, and the separator were used to obtain a stacked electrode assembly. The electrode assembly was housed in a case, and a nonaqueous electrolyte solution was injected, and the case is then sealed. Thus, a nonaqueous electrolyte energy storage device according to Example 1 was obtained.

### [Example 2]

A nonaqueous electrolyte energy storage device according to Example 2 were obtained similarly to Example 1, except for using the following electrolyte solution.

In a solvent obtained by mixing an ethylene carbonate and an ethyl methyl carbonate at a volume ratio of 30 : 70, LiPF₆ was dissolved at a concentration of 1.2 mol/dm³, and an ethylene sulfate (compound A) as an additive and a lithium difluorophosphate (LiPO₂F₂) were further dissolved respectively at a concentration of 0.5% by mass and a concentration of 0.5% by mass to obtain a nonaqueous electrolyte solution.

### [Comparative Example 1]

A nonaqueous electrolyte energy storage device according to Comparative Example 1 was obtained similarly to Example 1 except for using a nonaqueous electrolyte solution in which 4,4'-bis(2,2-dioxo-1,3,2-dioxathiolane) (compound B represented by the following formula (2)) was dissolved as an additive instead of the ethylene sulfate (compound A).

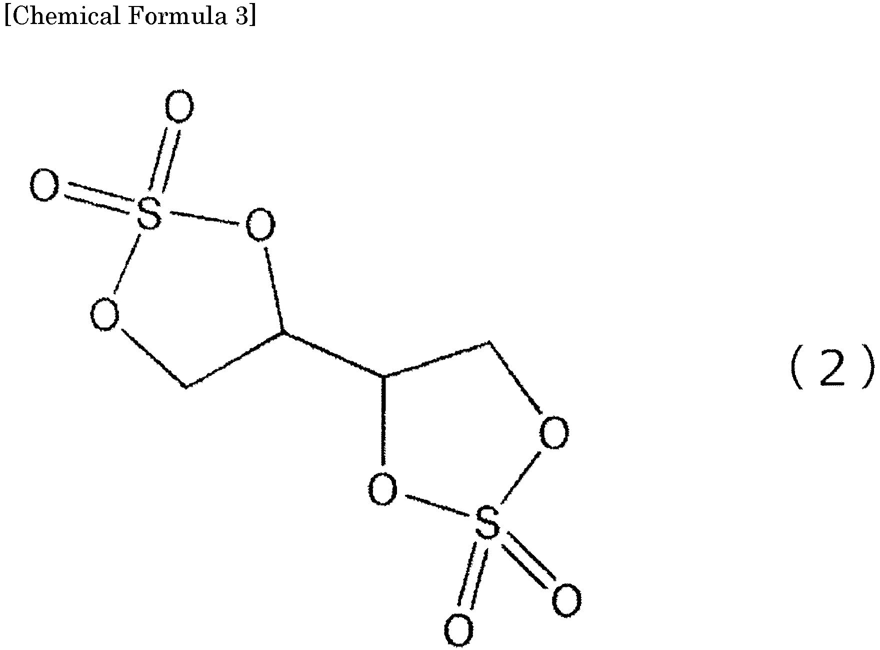

### [Reference Example 1]

A nonaqueous electrolyte energy storage device according to Reference Example 1 was obtained similarly to Comparative Example 1 except for using hollow natural graphite (void ratio: 7.69%) as a negative active material instead of the solid natural graphite.

### [Reference Example 2]

A nonaqueous electrolyte energy storage device according to Reference Example 2 was obtained similarly to Example 1 except for using hollow natural graphite (void ratio: 7.69%) as a negative active material instead of the solid natural graphite.

### [Reference Example 3]

A nonaqueous electrolyte energy storage device according to Reference Example 3 was obtained similarly to Example 2 except for using hollow natural graphite (void ratio: 7.69%) as a negative active material instead of the solid natural graphite.

### (Evaluation: Low temperature DCR)

The respective nonaqueous electrolyte energy storage devices according to Examples 1 and 2, Comparative Example 1, and Reference Examples 1 to 3 were first subjected to constant current charge up to 4.1 V at a current of 0.2 C at 25°C, and then subjected to constant voltage charge at 4.1 V. With regard to the charge termination conditions, the charge was performed until the charge current reached 0.01 C. After the charge, a pause of 10 minutes was provided, the devices were subjected to constant current discharge to 2.75 V at a current of 1.0 C at 25°C. After the discharge, a pause of 10 minutes was provided. Subsequently, the energy storage devices were subjected to constant current charge at a current of 1.0 C at 25°C to the SOC of 50%. The energy storage devices were stored in a thermostatic bath at -10°C for 4 hours, and then discharged at each current value of 0.5 C, 1.0 C, or 1.5 C for 30 seconds. After completion of each discharge, the energy storage devices were subjected to constant current charge at a current of 0.2 C to the SOC of 50%. The relationship between the current value and the voltage at 10 seconds after the start of the discharge for each discharge was plotted, and the low-temperature direct-current resistance (low temperature DCR) was determined from the slope of a straight line obtained from the plot of three points. The determined low temperature DCRs are shown in Table 1. In addition, the relative values of the low temperature DCRs based on the case of using the compound B as an additive are also shown in Table 1. More specifically, the low temperature DCRs (relative values) of Comparative Example 1 and Examples 1 and 2 and of Reference Examples 1 to 3 are values respectively based on Comparative Example 1 (100%) and based on Reference Example 1 (100%).

**[Table 1]**

| | Negative active material | | Additive | | Low temperature DCR | |
|---|---|---|---|---|---|---|
| | - | void ratio (%) | | | (m Ω cm²) | Relative value (%) |
| Comparative Example 1 | Solid natural graphite | 0.49 | Compound B | - | 38.7 | 100 |
| Example 1 | Solid natural graphite | 0.49 | Compound A | - | 35.8 | 93 |
| Example 2 | Solid natural graphite | 0.49 | Compound A | LiPO₂F₂ | 27.7 | 72 |
| Reference Example 1 | Hollow natural graphite | 7.69 | Compound B | - | 37.2 | 100 |
| Reference Example 2 | Hollow natural graphite | 7.69 | Compound A | - | 37.5 | 101 |
| Reference Example 3 | Hollow natural graphite | 7.69 | Compound A | LiPO₂F₂ | 30.3 | 81 |

| | | | | | | |
|---|---|---|---|---|---|---|
| Compound A: ethylene sulfate Compound B: 4,4'-bis(2,2-dioxo-1,3,2-dioxathiolane) | | | | | | |

### [Reference Example 4]

### (Fabrication of positive electrode)

A positive composite paste was prepared with the use of LiNi_{1/3}Co_{1/3}Mn_{1/3}O₂ as a positive active material, acetylene black (AB) as a conductive agent, a polyvinylidene fluoride (PVDF) as a binder, and N-methylpyrrolidone (NMP) as a dispersion medium. It is to be noted that the mass ratios of the positive active material, AB, and PVDF were set to be 93 : 4 : 3 (in terms of solid content). The positive composite paste was applied to both surfaces of an aluminum foil as a positive substrate, and dried. Thereafter, roll pressing was performed to obtain a positive electrode.

### (Fabrication of negative electrode)

Hollow natural graphite (void ratio: 7.69%) as a negative active material, a styrene-butadiene rubber (SBR) as a binder, a carboxymethyl cellulose (CMC) as a thickener, and water as a dispersion medium were used to prepare a negative composite paste. It is to be noted that the mass ratios of the hollow natural graphite, SBR, and CMC were set to be 98 : 1 : 1 (in terms of solid content). The negative composite paste was applied to both surfaces of a copper foil as a negative substrate, and dried. Thereafter, roll pressing was performed to obtain a negative electrode.

### (Nonaqueous electrolyte solution)

LiPF₆ was dissolved at a concentration of 1.2 mol/dm³ in a solvent obtained by mixing an ethylene carbonate and an ethyl methyl carbonate at a volume ratio of 30 : 70 to obtain a nonaqueous electrolyte solution.

### (Separator)

A polyolefin microporous membrane was used for the separator.

### (Assembly of nonaqueous electrolyte energy storage device)

The positive electrode, the negative electrode, and the separator were used to obtain a wound electrode assembly. The electrode assembly was housed in a case, and a nonaqueous electrolyte solution was injected, and the case is then sealed. Thus, a nonaqueous electrolyte energy storage device according to Reference Example 4 was obtained.

### [Reference Example 5]

A nonaqueous electrolyte energy storage device according to Reference Example 5 was obtained similarly to Reference Example 4 except for using solid natural graphite (void ratio: 0.49%) as a negative active material instead of the hollow natural graphite.

### (Initial charge-discharge)

The respective nonaqueous electrolyte energy storage devices according to Reference Examples 4 and 5 were subjected to initial charge-discharge in the following manner. The energy storage devices were subjected to constant current charge to 4.1 V at a current of 0.2 C at 25°C, and then to constant voltage charge at 4.1 V. With regard to the charge termination conditions, the charge was performed until the charge current reached 0.01 C. After the charge, a pause of 10 minutes was provided, the devices were subjected to constant current discharge to 2.75 V at a discharge current of 0.2 C at 25°C. After the discharge, a pause of 10 minutes was provided.

### (Evaluation: Low temperature DCR)

The respective nonaqueous electrolyte energy storage devices according to Reference Examples 4 and 5, subjected to the initial charge-discharge mentioned above, were subjected to constant current charge at a current of 1.0 C at 25°C to the SOC of 50%. The energy storage devices were stored in a thermostatic bath at -10°C for 4 hours, and then discharged at each current value of 0.2 C, 0.5 C, or 1.0 C for 30 seconds. After completion of each discharge, the energy storage devices were subjected to constant current charge at a current of 1.0 C to the SOC of 50%. The relationship between the current value and the voltage at 10 seconds after the start of the discharge for each discharge was plotted, and the low-temperature direct-current resistance (low temperature DCR) was determined from the slope of a straight line obtained from the plot of three points. The determined low temperature DCRs are shown in Table 2.

### (Evaluation: capacity retention ratio after charge-discharge cycle)

The respective nonaqueous electrolyte energy storage devices according to Reference Examples 4 and 5, subjected to the initial charge-discharge mentioned above, were subjected to a charge-discharge cycle test in the following manner. At 25°C, the devices were subjected to constant current constant voltage charge at a charge current of 1 C and an end-of-charge voltage of 4.1 V. With regard to the charge termination conditions, the charge was performed until the charge current reached 0.01 C. After the charge, a pause of 10 minutes was provided, the devices were subjected to constant current discharge at a discharge current of 1 C and an end-of-discharge voltage of 2.75 V at 25°C. The discharge capacity obtained under the conditions was defined as a discharge capacity before charge-discharge cycles. Thereafter, at 60°C, the devices were subjected to a charge-discharge cycle test under charge conditions of charge current: 4 C and end-of-charge voltage: 4.0 V and under discharge conditions of discharge current: 4 C and end-of-discharge voltage: 3.4 V. After each of the charge and the discharge, a pause of 10 minutes was provided. This charge-discharge was performed for 11430 cycles. Thereafter, at 25°C, the devices were subjected to constant current constant voltage charge at a charge current of 1 C and an end-of-charge voltage of 4.1 V. With regard to the charge termination conditions, the charge was performed until the charge current reached 0.01 C. After the charge, a pause of 10 minutes was provided, the devices were subjected to constant current discharge at a discharge current of 1 C and an end-of-discharge voltage of 2.75 V at 25°C. The discharge capacity obtained was defined as a discharge capacity after charge-discharge cycles. The percentage of the discharge capacity after the charge-discharge cycles test with respect to the discharge capacity before the charge-discharge cycles was defined as a capacity retention ratio after the charge-discharge cycles. The obtained capacity retention ratios are shown in Table 2.

**[Table 2]**

| | Negative active material | | Low temperature DCR (mΩ) | Capacity retention ratio (%) |
|---|---|---|---|---|
| | - | void ratio (%) | | |
| Reference Example 4 | Hollow natural graphite | 7.69 | 208.4 | 68 |
| Reference Example 5 | Solid natural graphite | 0.49 | 213.5 | 74 |

As shown in Table 1, when Comparative Example 1 and Example 1 in which the solid graphite was used for the negative active materials was compared with each other, the low temperature DCR of the nonaqueous electrolyte energy storage device according to Example 1 with the nonaqueous electrolyte containing the compound represented by the formula (1) was reduced as compared with that of the nonaqueous electrolyte energy storage device according to Comparative Example 1 with the nonaqueous electrolyte containing no compound represented by the formula (1). Furthermore, the low temperature DCR of the nonaqueous electrolyte energy storage device according to Example 2 with the nonaqueous electrolyte containing the difluorophosphate together with the compound represented by the formula (1) was further reduced. In contrast, when Reference Example 1 and Reference Example 2 in which the hollow graphite was used for the negative active materials was compared with each other, the low temperature DCR of the nonaqueous electrolyte energy storage device according to Reference Example 2 with the nonaqueous electrolyte containing the compound represented by the formula (1) was increased as compared with that of the nonaqueous electrolyte energy storage device according to Reference Example 1 with the nonaqueous electrolyte containing no compound represented by the formula (1). It has been successfully confirmed that the effect of reducing the low temperature DCR of the nonaqueous electrolyte energy storage device with the nonaqueous electrolyte containing the compound represented by the formula (1) is a specific effect that is produced when the solid graphite is used for the negative active material. Also in the nonaqueous electrolyte energy storage device in which the hollow graphite was used for the negative active material as in Reference Example 3, when the difluorophosphate was contained together with the compound represented by the formula (1) in the nonaqueous electrolyte, the low temperature DCR was reduced, but the effect thereof was smaller as compared with that in Example 2.

In addition, as shown in Table 2, it is found that when the nonaqueous electrolyte contains no compound represented by the formula (1), the nonaqueous electrolyte energy storage device according to Reference Example 5 in which the solid graphite is used for the negative active material has a higher low-temperature DCR despite the good capacity retention ratio after charge-discharge cycles, as compared with the nonaqueous electrolyte energy storage device according to Reference Example 4 in which the hollow graphite is used for the negative active material.

The present invention can be applied to energy storage devices and the like for use as power sources for electronic devices such as personal computers and communication terminals, automobiles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a negative electrode including a negative active material including solid graphite; and
a nonaqueous electrolyte including a compound represented by the following formula (1): 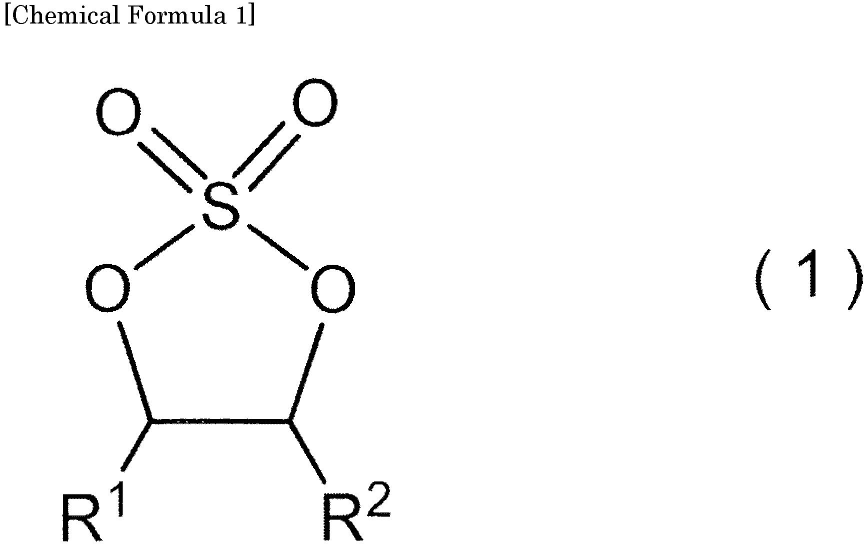 (In the formula (1), R¹ and R² are each independently a hydrogen atom or a hydrocarbon group, provided that the total number of carbon atoms of R¹ and R² is 3 or less).

2. The nonaqueous electrolyte energy storage device according to claim 1, wherein the nonaqueous electrolyte further includes a difluorophosphate.

3. The nonaqueous electrolyte energy storage device according to claim 1 or 2, wherein a ratio of an area occupied by the solid graphite to an area occupied by the negative active material is more than 50% in a cross-sectional SEM image of the negative electrode.

4. The nonaqueous electrolyte energy storage device according to claim 1 or 2, wherein the solid graphite is natural graphite.

5. The nonaqueous electrolyte energy storage device according to claim 1 or 2, wherein, in the solid graphite, an area ratio of voids(void ratio) in particles to a total area of the particles is 0.01% or more and 0.5% or less in a cross section of the particles observed in an SEM image acquired with use of a scanning electron microscope (SEM).

6. The nonaqueous electrolyte energy storage device according to claim 1 or 2, wherein a content of the compound represented by the formula (1) in the nonaqueous electrolyte is more than 0% by mass and 5% by mass or less.
